# EUROPEAN PATENT APPLICATION

(11) **EP 2 557 395 A1**
(43) Date of publication of application: **13.02.2013**
(21) Application number: 11006605.7
(22) Date of filing: 11.08.2011
(51) Int. Cl.: G01C 21/36, G01C 21/34

(54) **Method and system for navigation**

(71) Applicant: Harman Becker Automotive Systems GmbH, 76307 Karlsbad (DE)
(72) Inventor: Radner, Markus, 81873 München (DE)
(74) Representative: Müller, Wolf-Christian

(57) **Abstract**

Method and System for Navigation, wherein
- a current position (100) is determined,
- a road segment (150, 151, 153) associated with the current position (100) is determined,
- a first direction (110) of a vehicle motion within the road segment (150, 151, 153) is determined,
- an input by a user is determined, the input being associated with a second direction (220, 223),
- initiated by the input a target position (200, 203) is determined, the target position (200, 203) being determined based on the current position (100) and the second direction (220, 223), and
- a route (300, 303) from the current position (100) to the target position (200, 203) is calculated.

## Description

EP 2 068 121 B1 shows a navigations system including route guidance function and method of providing route guidance to a user. A navigation system detects the position of a user for performing route guidance to a destination which the user has entered into the navigation system. The navigation system detects the position of a vehicle the user is using for travelling, wherein the current position of the vehicle is typically detected by using a navigation sensor in the vehicle, a receiver such as a GPS (Global Positioning System) receiver, and map data corresponding to an area surrounding the detected position. Generally, a navigation system may display a map image on a display screen and may display a mark indicating the current position of the vehicle or the user, respectively. The navigation system can search for a route by means of a route processing unit which calculates a route from a start point to a destination, entered by the user. As the current position of the vehicle changes with the movement of the vehicle, the vehicle position mark is moved along the route on the display screen, or a map image adjacent to the vehicle is scrolled while the vehicle position mark persists at a predetermined point on the display screen. When the vehicle approaches a determined maneuver point on the route at which the user is required to make a maneuver from a movement in a current direction to a movement in another direction, for example when changing a road on which the user is travelling, the route processing unit provides information to the user regarding the route which indicates the maneuver point, for example indicates that the user has to leave the road on which the user is travelling. For example, the display screen shows an arrow which indicates the direction the user has to take at the maneuver point, for example indicating that the user has to leave the highway on which the user is travelling at the next exit on the right. As an alternative or additionally, the navigation system may also indicate the maneuver point to the user by means of voice output.

EP 2 068 121 B1 shows the navigation system including route guidance function, that comprises a route processing unit adapted for calculating a first route to a destination and providing information to the user regarding the first route. The navigation system determines at least one maneuver point at which the user is required to make a maneuver from a movement in a first direction to a movement in a second direction. The navigations system comprises a deceleration calculating unit adapted for receiving information regarding the at least one maneuver point, and which is adapted for calculating a deceleration value which is currently required for the user to make the maneuver. The deceleration calculating unit is adapted for determining whether the deceleration value exceeds a predetermined reference value. The route processing unit is adapted for calculating a second route to the destination as an alternative to the first route, wherein according to the second route the user is not required at the maneuver point to make the maneuver.

From WO 2008/112335 A1 an apparatus and method are known for determining a suggested route having an estimated minimum fuel usage. For example, the route determiner uses the speed limit of a segment plus 10 miles per hour for the estimated speed in calculating the estimated amount of fuel that will be used.

The object of the invention is to improve a method for navigation as much as possible.

Said object is attained by a method with the features of independent claim 1. Advantageous refinements are the subject of dependent claims and included in the description.

Accordingly, a method for navigation is provided. In the method, a current position, particularly based on satellite signals (GPS), is determined by means of a receiver, preferably continuously.

In the method, a road segment associated with the current position is determined preferably from locally saved map data. Preferably, this current road segment is determined continuously based on the current position. A road segment in this regard is defined between two points in the map data.

In the method, a first direction of a vehicle motion within the road segment is determined. The first direction is preferably defined as the direction from point A to point B in the map data or as a cardinal direction. For example, the direction is specified based on a plurality of determined positions.

In the method, an input by a user is determined. The input is associated with a second direction. The second direction is determined preferably based on the first direction and advantageously based on the map data. The second direction is defined, for example, between two points A, B in the map data or as a cardinal direction. The input by the user occurs, for example, manually, for example, by a button or touchscreen or via a voice command by means of speech recognition.

In the method, a target position is determined initiated by the input, preferably automatically without a further input. The target position is determined based on the current position and the second direction. Input of an address of the target position by the user is not necessary, however.

In the method, a route from the current position to the target position is calculated. A route guidance is started preferably after the route is calculated. Preferably, the route guidance is started immediately, i.e., without additional input by the user.

The invention further provides a navigation system improved as much as possible.

Said object is attained by the system with the features of independent claim 9. Advantageous developments are contained in the description.

Accordingly, a navigation system is provided. The system has an input unit for input by the user. The system has an arithmetic logic unit for calculating a route based on the input.

The arithmetic logic unit is set up to determine a current position, a road segment associated with the current position, and a first direction of vehicle motion within the road segment.

The arithmetic logic unit is set up to determine a target position initiated by the input. The target position is based on the current position and a second direction.

The arithmetic logic unit is set up to calculate a route from the current position to the target position.

Preferably, the arithmetic logic unit is configured to start a route guidance. Preferably the route guidance is done by means of maneuver instructions, e.g. showing the route on a display unit.

Preferably, the arithmetic logic unit is configured to determine the second direction based on the first direction and optionally based on the map data. Advantageously, the second direction is set opposite to the first direction, when the road segment is not a one-way street.

The refinements described hereinafter relate to both the system and the method for navigation.

According to an advantageous embodiment, the route without a turn-around maneuver within the road segment is calculated. Instead of the turn-around maneuver, preferably only left turns and right turns are allowed. As a result, it is possible for the driver to make the most rapid reversal of the driving direction, when the turn-around maneuver is not possible, for example, because of high traffic volume.

Another advantageous embodiment provides that the route is changed by the input. For example, one of several calculated routes is selected by the input. For example, a selection between different routes can be made by successive button actuations.

In another advantageous embodiment, the route is changed in that a driving maneuver, e.g., the driving maneuver "turn around," is allowed or not allowed for calculating the route by the input. For example, in a first actuation of the input a turn-around is allowed, whereas in a second actuation of the input the turn-around is not allowed, so that a calculated first route is associated with the first actuation and a calculated second route with the second actuation.

An especially preferred embodiment provides that the input occurs by a number of precisely one input step or precisely two input steps. Because of the very few input steps, distraction of the driver from the traffic situation is reduced to a minimum. For example, the input is achieved by a single button input or a single voice command. Alternatively, the input is achieved by opening the main menu as a first input step and selecting the function as a second input step, whereby the function in the main menu is to be executed immediately.

A preferred embodiment provides that the second direction and the first direction are different. Preferably, the first direction and the second direction differ from one another in an obtuse angle. Preferably, the second direction is set opposite to the first direction, when the road segment is not a one-way street. Preferably, the second direction corresponds to the first direction, when the road segment is a one-way street. In an alternative embodiment, an output occurs when the road segment is a one-way street. For example, the output is an audible warning signal or an audible descriptive text, if the street is a one-way street, so that turning around in the street is not possible. Alternatively, the output can also be visual, for example, as a blinking direction arrow.

The previously described refinement variants are especially advantageous both individually and in combination. In this regard, all refinement variants can be combined with one another. Some possible combinations are explained in the description of the exemplary embodiments shown in the figures. These depicted combinations of possible refinement variants are not definitive, however.

The invention will be described in greater detail hereinafter by exemplary embodiments using graphic illustrations.

In the drawing:

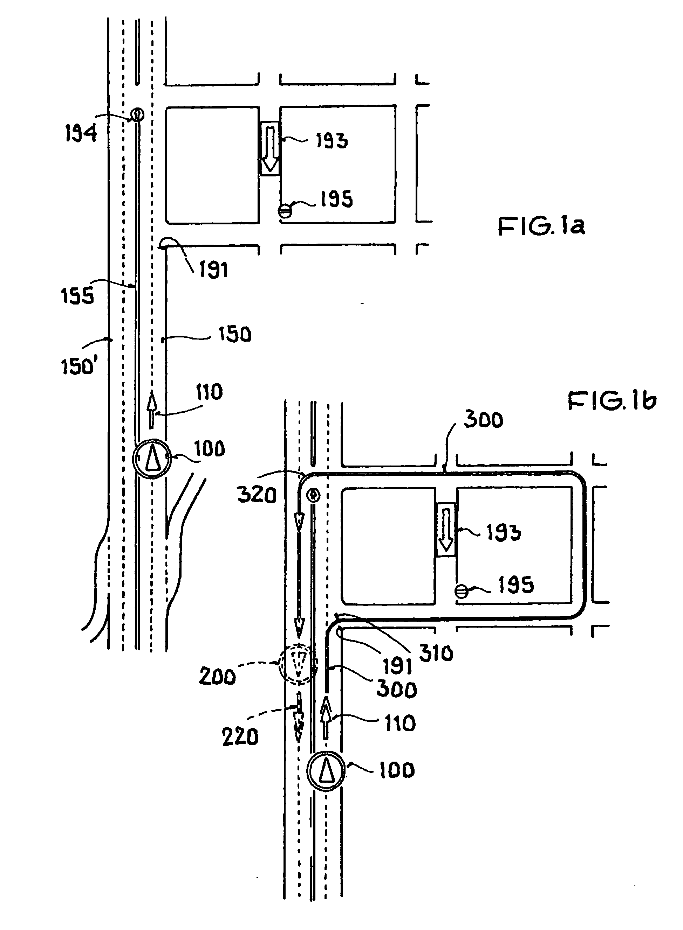

- FIG. 1a: shows a detail of a schematic city map;
- FIG. 1 b: shows a detail of a schematic city map with a calculated route of an exemplary embodiment;
- FIG. 2: shows a schematic illustration for calculating a target position of an exemplary embodiment;
- FIG. 3: shows a schematic illustration for calculating a target position of another exemplary embodiment;
- FIG. 4: shows a schematic block circuit diagram of a navigation system;
- FIG. 4a: shows a schematic view of a touch-sensitive display of a navigation system;
- FIG. 4b: shows another schematic view of a touch-sensitive display of a navigation system;
- FIG. 4c: shows a schematic view of an input unit; and
- FIG. 5: shows a schematic illustration for calculating a target position and a route of another exemplary embodiment.

When a driver attempts to reach a destination without the aid of a navigation system, no route is initially calculated by the navigation system. The navigation system in the on-mode nevertheless can determine a current position 100, a current direction 110, and a current road segment 150 in which the vehicle is currently located. The driver can find himself in a situation in which he wishes to turn around. For example, the driver has passed the exit on the city highway. Because turning around on main roads may often be difficult, when, e.g., a road barrier divides two lanes, support of the driver by the navigation system would be advantageous.

This type of situation is shown schematically in FIG. 1a by a road map detail. The vehicle is located in current position 100 and is currently driving in first direction 110. The first driving direction 110 is permitted in the lane in which the vehicle is located according to traffic rules. Turning around within the current travelled lane itself is not possible, however, because there is traffic in the opposite direction in a parallel lane. Both lanes are separated from one another by a central crash barrier 155. If the driver has no knowledge of the area, he may need to make a long detour to reach the correct exit again. To input a destination manually, the driver would need to know the destination, stop, and enter the destination address.

The navigation system has stored map data. In the exemplary embodiment of FIG. 1 a, current road segment 150 and road segment 150' of the opposite direction, junction 191, one-way street 193, and restrictions by traffic controls 194, 195 are stored. Thus, the navigation system knows that the traffic control "go straight" 194 does not permit a turn-around.

In the exemplary embodiment of FIG. 1b, a short route 300 is calculated by the navigation system. Short route 300 in the exemplary embodiment of FIG. 1b produces a turning around in a second direction 220, which deviates from current first direction 110. Current position 100 of the vehicle is determined continuously on the basis of satellite signals. Road segment 150 associated with current position 100 is determined by the navigation unit from map data. In addition, first direction 110 of the vehicle motion within road segment 150 is determined.

The driver makes an input associated with second direction 220. For example, the input is designated as "turn around," so that the driver by the input "turn around" initiates a calculation of short route 300. Initiated by the input "turn around," a target position 200 is determined. Target position 200 is based only on current position 100 and second direction 220 associated with the input "turn around." The exemplary embodiment of FIG. 1b achieves the advantage that the driver need not define target 200 manually by a time-consuming input of an address, which is inconvenient and dangerous while driving, because the driver's attention is distracted from the traffic. In contrast, a new advantageous convenience function is achieved by the exemplary embodiment of FIG. 1 b in that target position 200 with second driving direction 220 and short route 300 is calculated ad hoc for current position 100 and current first driving direction 110. After the short route is calculated, the route guidance is preferably started automatically. If the driver deviates from short route 300, short route 300 is recalculated, which also has the reversal of the driving direction proceeding from original position 100; i.e., target position 200 is preferably retained.

In this regard, the function for automatic target calculation is not limited to the special case shown in FIG. 1 b. By means of the navigation system, a search for the next opportunity for turning around on the street is made or a short route is calculated, which describes a loop, such as, e.g., turn right -> turn left repeatedly - > optionally turn right once again.

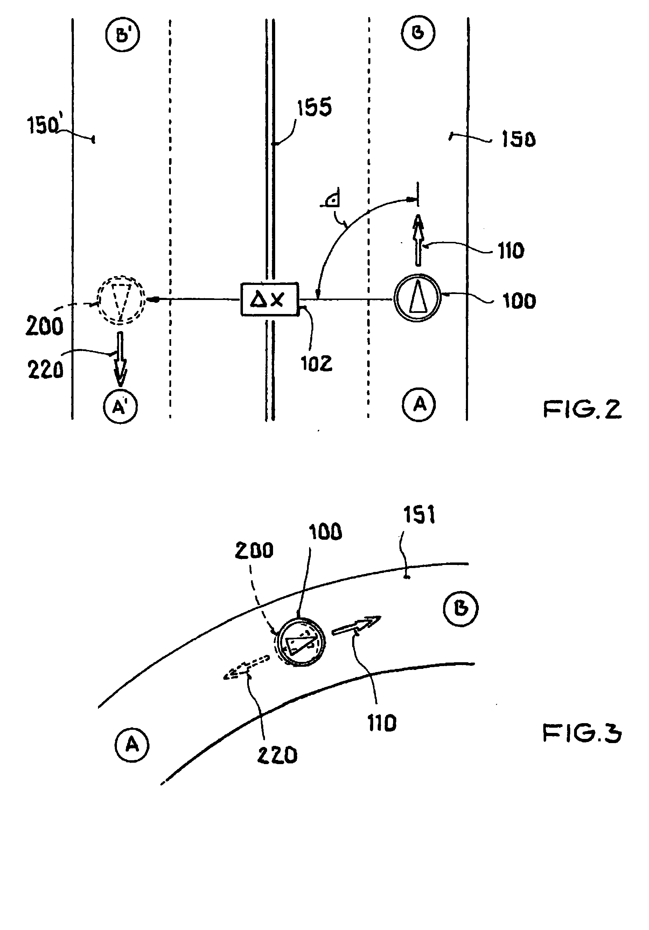

It is shown schematically in FIG. 2 how target position 200 is determined, when current position 100 of the vehicle is on a road segment 150 of a highway from node A to B. The vehicle in this case is proceeding from A to B in first direction 110. Target position 200 at the intersection with the road segment between the node B' and A' is determined from current position 100 from first direction 110 at an angle, in the exemplary embodiment of FIG. 2 of 90°. Target position 200 is thereby determined on the adjacent lane with the opposite second driving direction 220. Target position 200 is determined computationally by shifting current position 100 by the segment Δx along line 102. Next, target position 200 can be shifted computationally between nodes B' and A' optionally, for example, by a constant offset along road segment 150'.

Another exemplary embodiment for the automatic determination of target position 200 is shown schematically in FIG. 3. The vehicle is in current position 100 with current first driving direction 110 from node A to node B. In the exemplary embodiment of FIG. 3, target position 200 is equivalent to current position 100. In contrast, second direction 220 associated with target position 200 is set opposite to first direction 110 associated with current position 100. For this purpose, first direction 110 is inverted, for example, and optionally adjusted to a course in road segment 151, so that first direction 110 and second direction 220 are not necessarily aligned.

After target position 200 and second direction 220 are determined, the route is calculated. For example, in the exemplary embodiment of FIG. 3, a maneuver instruction for a turn-around maneuver at the next possible place in road segment 151 is output via a screen or as an audible voice instruction. Often, owing to a high traffic volume, a turn-around maneuver is not possible, however, because the oncoming traffic does actually not allow turning around. In the exemplary embodiment of FIG. 3, the route is therefore changed by a driver input. For example, the input is made by means of a button. The route is then changed by another actuation of the button. This can also occur repeatedly, so that the driver can step through different routes. Preferably, the route is displayed on the screen. For example, the route can be changed in that a driving maneuver, e.g., "please turn around," is allowed or not allowed for calculating the route by the input. In the aforementioned example, because of the high oncoming traffic, the driving maneuver "turn around" is not allowed and the route is calculated without this driving maneuver, in that, for example, instead of turning around a left and/or right turn is made.

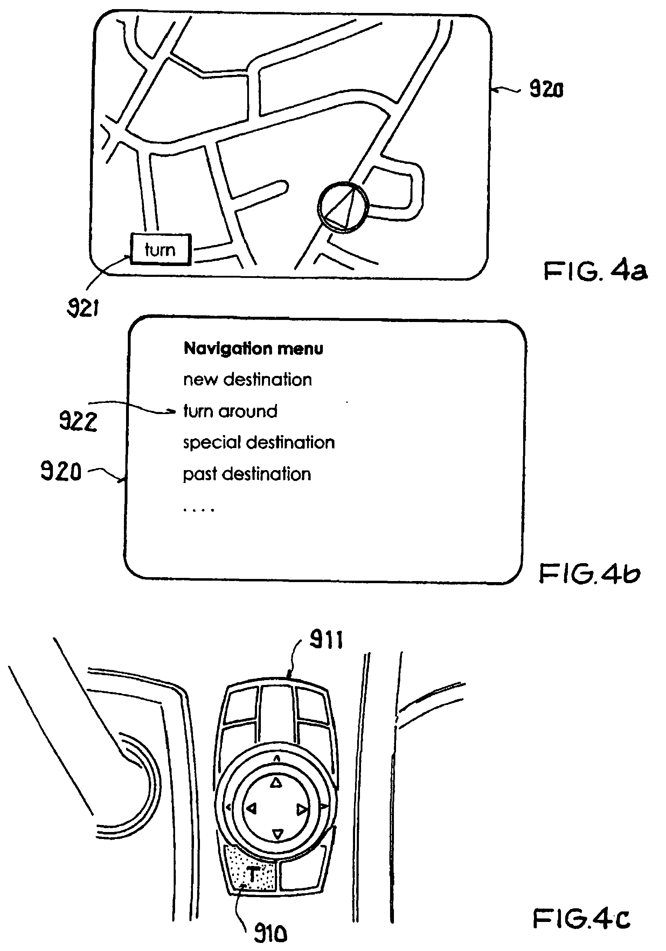

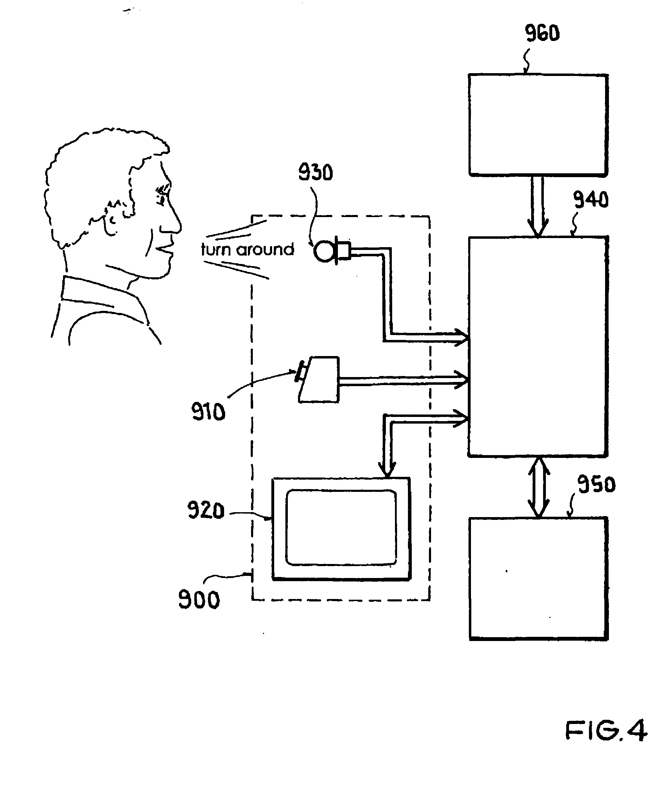

A navigation system with an input unit 900, an arithmetic logic unit 940, a database 950, and a receiver 960 is shown schematically in FIG. 4. Satellite signals are received by the receiver and current position 100 is determined from the satellite signals. Input unit 900 of the exemplary embodiment of FIG. 4 provides 3 input options. Input unit 900 has a button 910, which is associated with the function of automatically calculating target position 200. Actuation of button 910 is the input that leads to the calculation of target position 200. Input unit 900 has a voice recognition device 930, which recognizes a phrase as input, which is associated with the function of automatically calculating target position 200. In the exemplary embodiment of FIG. 4, the phrase "turn around" is assigned to the function.

Input unit 900 of the exemplary embodiment of FIG. 4 has a screen 920 with a touch-sensitive surface (touchscreen 920). As shown in the exemplary embodiment of FIG. 4a, for example, an icon 921 shown on touchscreen 920, which, for example, is in the form of a widget, is associated with the input of the function for automatically calculating target position 200. Another option for input using touchscreen 920 is shown schematically in FIG. 4b. In the main menu, the function for automatically calculating target position 200 by selecting a special menu entry 922 can be input by the driver.

In the exemplary embodiment of FIG. 4a, the function is input by precisely one input step. In contrast, in the exemplary embodiment of FIG. 4b, the function is input by precisely two input steps, namely by activating the main menu "navigation menu" and by touching menu entry 922 "turn around." The function is simple and rapid to achieve for the driver by this control concept. Safety for the driver is therefore clearly increased and stress is clearly reduced, because he is not distracted from the traffic situation by the very short input with a maximum of two input steps. In addition, an opportunity for turning around, which conforms to traffic rules, is quickly created for the driver. This function produces a route that provides in particular the shortest path to the next turn-around opportunity. The route can thereby comprise turning right into side streets, when the next left-turn opportunity is too far away.

An example of a special button 910 in an input unit 911 in a center console of a vehicle is shown schematically in FIG. 4c. Preferably, the function of turning around is visualized by a symbol or a letter or text on the button. The function for the automatic target calculation can be achieved by the driver quickly and easily by a simple input by means of the exemplary embodiments shown in FIGS. 4 to 4c. Thus, the input can occur much more rapidly than an input of a destination address.

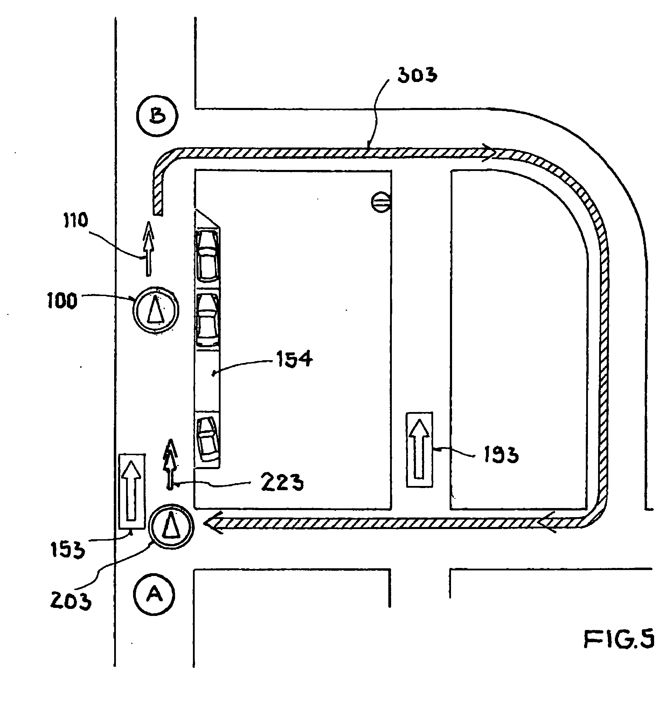

Another exemplary embodiment is shown schematically in Fig. 5. If current position 100 of the vehicle is located in a road segment 153 of a one-way street 153, a turn-around is not permitted. In this case the turn-around icon 921 in Fig. 4a or the menu item 922 in the main menu of the embodiment of Fig. 4b is greyed out. If the button 910 of the embodiment of Fig. 4c is nevertheless pressed, a suitable instruction is output e.g. announcing that a turn-around is not permitted.

In the exemplary embodiment of FIG. 5 the driver searches for a parking space 154 and has just driven past parking space 154, so that from the current position 100 it is not possible to turn-around to reach the parking space 154. In this case the driver wants to drive through the one-way street 153 again from its beginning. Hence a function is provided guiding the driver to the beginning of the one-way street 153. Initiated by an input associated with a function e.g. "get back to the beginning of the one-way street" a target position 203 is determined. The target position 203 is determined based on the current position 100 and map data, e.g. by estimating the target position being at the first intersection of the one-way street 153. In this case a second direction 223 is based on the map data and is equal to the only permitted direction of the one way street. After determining the target position 203 a route 303 from the current position 100 to the target position 203 is calculated as shown in Fig. 5, so that the route guidance allows the driver to reach parking space 154 again for parking.

The invention is not limited to the shown embodiment variants of FIGS. 1a through 5. For example, it is possible to provide a different input or other conditions for route calculation. The functionality of FIG. 1b can be used especially advantageously for a navigation system of a motor vehicle.

### List of Reference Characters

- 100: current position
- 102: offset, line
- 110: first direction, current direction
- 150, 150', 151, 153: road segment
- 154: parking space
- 155: road barrier, central crash barrier
- 191: junction
- 193: one-way street
- 194, 195: traffic rules, traffic signs
- 200, 203: target position
- 220, 223: second direction, target direction
- 300, 303: route
- 310, 320: driving maneuver
- 900: touchscreen, touch-sensitive display
- 910: button
- 911: control panel
- 921: input element, widget, icon
- 922: menu entry
- 930: microphone
- 940: arithmetic logic unit, microcontroller
- 950: database, map data
- 960: receiver, GPS
- A, B, A', B': point, node

## Claims

1. A method for navigation, wherein
- a current position (100) is determined,
- a road segment (150, 151, 153) associated with the current position (100) is determined,
- a first direction (110) of a vehicle motion within the road segment (150, 151, 153) is determined,
- an input by a user is determined, the input being associated with a second direction (220, 223),
- initiated by the input a target position (200, 203) is determined, the target position (200, 203) being determined based on the current position (100) and the second direction (220, 223), and
- a route (300, 303) from the current position (100) to the target position (200, 203) is calculated.

2. The method according to claim 1,
- wherein the route (300, 303) without a turn-around maneuver within the road segment (150, 153) is calculated.

3. The method according to any one of the preceding claims,
- wherein the route (300, 303) is changed by the input.

4. The method according to claim 3,
- wherein the route (300, 303) is changed, particularly in that a driving maneuver is allowed or not allowed by the input for calculating the route (300, 303).

5. The method according to any one of the preceding claims,
- wherein the input occurs by a number of precisely one input step or precisely two input steps.

6. The method according to any one of the preceding claims,
- wherein the second direction (220) and the first direction (110) are different.

7. The method according to any one of the preceding claims,
- wherein the second direction (220) is set opposite to the first direction (110), when the road segment (150) is not a one-way street (153), and the second direction (203) corresponds to the first direction (110), when the road segment (153) is a one-way street (153).

8. The method according to any one of the preceding claims,
- wherein the determining of the target position is deactivated or an output occurs, when the road segment (153) is a one-way street (153).

9. A system for navigation,
- having an input unit (900) for input by the user,
- having an arithmetic logic unit (940) for calculating a route (300, 303) based on the input,
- wherein the arithmetic logic unit (940) is configured to determine a current position (100), a road segment (150, 153) associated with the current position (100), and a first direction (110) of vehicle motion within the road segment (150, 153),
- wherein the arithmetic logic unit (940) is configured to determine a target position (200, 203), the target position (200, 203) being based on the current position (100) and a second direction (220, 223), wherein the determination is initiated by the input, and
- wherein the arithmetic logic unit (940) is configured to calculate a route (300, 303) from the current position (100) to the target position (200, 203).
